# EUROPEAN PATENT APPLICATION

(11) **EP 4 420 854 A1**
(43) Date of publication of application: **28.08.2024**
(21) Application number: 23157830.3
(22) Date of filing: 21.02.2023
(51) Int. Cl.: B29C 44/58, B29C 44/44, B29C 44/34, B29C 33/04, B29C 35/04

(54) **A MOLD, PARTICULARLY A STEAM-CHEST MOLD, FOR PROCESSING EXPANDABLE OR EXPANDED POLYMER BEADS TO FORM A PARTICLE FOAM COMPONENT**

(71) Applicant: JSP International SARL, 60190 Estrées-Saint-Denis (FR)
(72) Inventor: KENDALL, Justin, 60190 Estrées-Saint-Denis (FR)
(74) Representative: Hafner & Kohl PartmbB

(57) **Abstract**

A mold (1), particularly a steam-chest mold, for processing expandable or expanded polymer beads to form a particle foam component, the mold comprising: at least one mold member (2) comprising at least one wall element (3) having a first face (3.1) at least partly delimiting a cavity (4) of the mold (1) which is to be filled with expandable or expanded polymer beads to form a particle foam component during operation of the mold (1),
wherein the at least one wall element (3) has a second face (3.2), particularly opposing the first face (3.1), which is provided with at least one recess (3.3) defining a channel structure for a tempering medium for tempering the at least one mold member (2), further comprising:
at least one thermal isolation element (8) attached to the second face (3.2) of the at least one wall element (3) for closing and thermally isolating the at least one recess (3.3) to form a closed channel structure.

## Description

The invention relates to a mold, particularly a steam-chest mold, for processing expandable or expanded polymer beads to form a particle foam component, the mold comprises at least one mold member comprising at least one wall element having a first face at least partly delimiting a cavity of the mold which is to be filled with expandable or expanded polymer beads to form a particle foam component during operation of the mold.

Respective molds for processing expandable or expanded polymer beads to form a particle foam component have been generally known from prior art in the field of processing expandable or expanded polymer beads to form a particle foam component. As a concrete example, respective molds are used in steam-chest molding processes.

The functional and constructive configuration of respective molds typically comprises at least one mold member, e.g. a mold halve, which comprises at least one wall element having a first contour or first face, respectively which at least partly delimits a cavity of the mold which is to be filled with expandable or expanded polymer beads to form a particle foam component during operation of the mold.

The at least one mold member may be provided with a tempering structure to temper, i.e. heat and/or cool, the at least one mold member, particularly the at least one wall element having a respective first contour or first face which at least partly delimits the cavity of the mold.

The functional and constructive configuration of known molds is typically designed for providing high throughput, high chemical stability, e.g. high corrosive stability, high physical stability, e.g. high mechanical stability and high thermal stability, etc.

However, the energy consumption for tempering a known mold, e.g. for performing respective heating and/or cooling cycles of the respective wall element, is typically not a factor which is taken into account for designing the functional and/or constructive configuration of the mold. In other words, known molds are typically not designed under consideration of aspects relating to the energy consumption for operating the mold, particularly with respect to respective heating and/or cooling cycles of a respective wall element, and thus, aspects enabling or relating to a sustainable operation of the mold.

It is the objective of the present invention to provide an improved mold, particularly a steam-chest mold, for processing expandable or expanded polymer beads to form a particle foam component.

The objective is achieved by the mold of present independent claim 1. The claims depending from present independent claim 1 relate to possible embodiments of the mold of present independent claim 1.

A first aspect of the invention relates to a mold, particularly a steam-chest mold, for processing expandable or expanded polymer beads to form a particle foam component. The mold is thus, generally configured for processing expandable or expanded polymer beads to form a particle foam component. Processing respective expandable or expanded polymer beads to form a particle foam component generally, comprises combining the expandable or expanded polymer beads in a cavity under specific chemical and/or physical conditions such that a particle foam component is formed. As a concrete example, the mold can be a steam-chest mold, i.e. a mold configured for performing steam-chest processes in which expandable or expanded polymer beads are combined under specific physical conditions, particularly specific thermal conditions, to form a particle foam component.

Respective expandable or expanded polymer beads which can be processed by the mold typically have a cellular or foamed (micro)structure. The term "bead" generally indicates the loose bead-, granulate-, particulate- or pellet-like structure of the material before fusing. The term "expandable" indicates that the beads can undergo an expansion when being processed with the mold. A respective expansion of the material is typically related with an increase in volume when being processed with the mold. The term "expanded" indicates that the beads already have undergone a certain expansion before being processed with the mold. Yet, it is possible that also respective expanded beads can undergo a (further) expansion when being processed with the mold. A respective further expansion of the beads is typically related with a further increase in volume when being processed with the mold. In either case, the term "expandable or expanded polymer bead material" can comprise expandable or expanded polymer bead materials.

Non-limiting examples of expandable or expanded polymer beads or bead materials, respectively which can be processed with the mold are olefin-based expandable or expanded polymer bead materials such as polyethylene-based materials (ePE) and/or polypropylene-based materials (ePP) and/or olefinic-thermoplastic-elastomers-based material (eTPO), styrene-based expandable or expanded polymer bead materials such as polystyrene-based materials (ePS) and/or acrylonitrile -butadiene-styrene-based materials (eABS) and/or styreneacrylonitrile-based materials (eSAN), ester-based expandable or expanded polymer bead materials, such as polycarbonate-based materials (ePC), polyethylene-terephthalate-based materials (ePET) and/or polybutylene terephthalate-based materials (ePBT) and/or polylactic-acid-based materials (ePLA) and/or polyhydroxyalkanoate based materials (ePHA), amide-based expandable or expanded polymer bead materials such as polyamide based materials (ePA-materials), urethane-based expandable or expanded polymer bead materials such as thermoplastic polyurethane-based materials (eTPU-materials), ether-based expandable or expanded polymer bead materials such as polyphenylene-ether-based materials (ePPE). Further, expandable or expanded polymer beads based on mixtures and/or blends and/or copolymer of at one or more of the aforementioned compositions are also conceivable.

The mold comprises at least one mold member comprising at least one wall element having a first contour or first face, respectively which at least partly delimits a cavity of the mold which cavity is fillable or to be filled, respectively with expandable or expanded polymer beads to be processed with the mold to form a particle foam component during operation of the mold. The first face of the at least one mold member thus, has a shape which at least partly reflects the shape of the particle foam component to be manufacturing with the mold. The first face of the at least one mold member thus, also has a shaping function with respect to the processing of the expandable or expanded polymer beads to form a particle foam component.

Typically the mold comprises at least one further mold member which comprises at least one further wall element having a further first contour or further first face, respectively which at least partly delimits the cavity of the mold which cavity is to be filled with expandable or expanded polymer beads to be processed with the mold to form a particle foam component during operation of the mold. Typically the first face of the at least one further mold member has a shape which at least partly reflects the shape of the particle foam component to be manufacturing with the mold. The first face of the at least one further mold member thus, can also have a shaping function with respect to the processing of the expandable or expanded polymer beads to form a particle foam component.

The at least one mold member can be deemed a first mold member, the at least one further mold member can be deemed a second mold member. Respective first and second mold members can also be deemed a first mold halve and a second mold halve, respectively. At least one of the at least one first mold member and the at least one second mold member can be moveably supported in at least one degree of freedom of motion so as to (reversibly) transfer the mold in a closed state and in an open state. Processing of the expandable or expanded polymer beads to form a particle foam component typically occurs in the closed state. In the open state, a respectively formed particle foam component can be removed from the mold. A drive device, e.g. an electric, hydraulic, or pneumatic drive device, can be assigned to the mold to effect transferring the mold in its closed and open state, respectively.

The configuration of the at least one mold member will be explained in more detail in the following. All remarks regarding the at least one mold member can also apply to any other mold member of the mold.

The at least one wall element of the at least one mold member also has a second face, particularly opposing the first face, which is provided with at least one recess defining a channel structure for a tempering medium, e.g. a gas and/or a liquid, for tempering the at least one mold member. As such, the at least one wall element of the at least one mold member can be tempered, i.e. heated and/or cooled, via a tempering medium flowing through the channel structure which is at least partly defined by the at least one recess provided with the second face of the at least one wall element of the at least one mold member. Hence, by providing the second face of the at least one wall element of the at least one mold member with at least one respective recess, the at least one wall element can be provided with a tempering structure for a respective tempering medium, the tempering structure being built through the channel structure which is defined by the at least one recess. The at least one recess can e.g. by provided by a groove, a slit, or any other geometry which reduces the cross-section of the at least one wall element of the at least one mold member to generate a respective channel structure for a tempering medium for tempering the at least one mold member. The concrete geometric configuration of the channel structure is thus, defined by the concrete geometric configuration of the at least one recess. In other words, geometric parameters of the at least one recess, such as but not limited to length, width, depth, shape, cross-sectional shape, etc. also define respective geometric parameters of the channel structure.

The second face of the at least one wall element can be provided with one or multiple respective recesses. In case of multiple recesses, each recess can build a channel of the channel structure. One or more recesses of the multiple recesses can communicate with each other to form a channel structure having a network of communicating channels.

Notably, given that the channel structure is built through the at least one recess in the second face of the at least one wall element of the at least one mold member, the channel structure and its one or more channels, respectively is/are typically open. Particularly, the at least one recess comprises an open cross-section defined by one or more wall portions of the at least one wall element of the at least one mold member. More particularly, a first wall portion of the at least one wall element of the at least one mold member can define a bottom portion of the at least one recess or channel structure, respectively and further wall portions of the at least one wall element of the at least one mold member, which further wall portions particularly extend at an angle relative to the first wall portion, define side portions of the at least one recess or channel structure, respectively. The first wall portion of the at least one wall element of the at least one mold member can be arranged and/or oriented parallel to the first face of the at least one wall element of the at least one mold member. The further wall portions at least one wall element of the at least one mold member can be arranged and/or oriented parallel to each other. Hence, the cross-sectional geometry of the at least one recess or channel structure, respectively can be defined by shape and/or arrangement of the first and further wall portions.

The at least one recess can have a cross-sectional basic shape which is curved or polygonal, particularly rectangular, for instance. As a concrete example, the at least one recess can thus, have a curved or a polygonal, particularly rectangular, cross-section. It is conceivable that the cross-sectional geometry or shape of the at least one recess or the channel structure, respectively can change along its extension in at least one specific extension direction. A respective change of the cross-sectional geometry or shape can e.g. be useful or used to concertedly influence the flow properties, e.g. flow velocity, flow profile, etc., of a tempering medium flowing through the at least one recess or the channel structure, respectively.

To close the at least one recess and the channel structure with its one or more channels, respectively, the at least one mold member comprises at least one thermal isolation element attached to the second face of the at least one wall element of the at least one mold member. The respective channel structure is thus, delimited by one or more wall element portions defining the at least one recess in the second face of the at least one wall element of the at least one mold member and one or more wall portions of the at least one thermal isolation element attached to the second face of the at least one wall element of the at least one mold member.

The at least one thermal isolation element serves for closing and thermally isolating the at least one recess to form a closed channel structure. Particularly, the at least one thermal isolation element serves for at least partly, if need be completely, thermally isolating the at least one recess against thermal losses via the second face of the at least one wall element of the at least one mold member and thus, against thermal losses towards any other element which is possibly attached to the second face of the at least one wall element of the at least one mold member. The at least one at least one thermal isolation element thus, enables that the thermal energy of the tempering medium flowing through the closed channel structure can be essentially kept within the at least one wall element of the at least one member which forms basis for a high tempering efficiency, particularly a high heating or cooling efficiency, via the first face of the at least one wall element of the at least one mold member. The mold thus, comprises a highly practical principle for providing a mold member with highly efficient tempering capabilities which can be achieved by attaching at least one respective thermal isolation element to the second face of the at least one wall element of the at least one mold member.

The tempering efficiency of the at least one wall can be influenced by the degree of coverage of the second face of the at least one wall element of the at least one mold member with the at least one thermal isolation element. As an example, the second face of the of the at least one wall element of the at least one mold member can comprise one or more freely exposed portions of the second face, i. e. portions which are not covered by the at least one thermal isolation element, which portions may form tempering interfaces enabling additional tempering of the at least one wall element of the at least one mold member. According to a concrete example, respective freely exposed portions of the second face could be used to provide fast cooling of the wall element by applying a cooling medium, such as e.g. water, to these portions. This principle can be useful when implementing molding processes in which a liquid, e.g. water, is sprayed on the mold, particularly a backside of the mold, for rapid cooling of the mold. When implementing substantially other molding processes, in which no liquid, e.g. water, is sprayed on the mold, it can be useful when the second face of the at least one wall element of the at least one mold member is (essentially) completely covered by the at least one thermal isolation element.

Hence, the design of the mold is special in that the closing of the at least one recess is effected through at least one thermal isolation element which serves two functions, namely: closing or covering the at least one recess to form at least one closed channel structure, wherein closing or covering the at least one recess can optionally comprise sealing the at least one closed channel structure; and further, thermally isolating the at least one closed channel structure to keep the thermal energy provided through a tempering medium flowing through the at least one closed channel structure in the at least one wall element of the at least one mold member and thus, avoid or at least reduce thermal losses via the second face of the at least one wall element of the at least one mold member. As will be apparent from further below, the at least one thermal isolation element is thus, formed from a material or material structure or comprises same which at least enables closing or covering the at least one recess and thermally isolating the at least one wall element of the at least one mold member against thermal losses via the second face of the at least one wall element of the at least one mold member.

The concrete geometric design of the at least one thermal isolation element can therefore, be a sheet, a sheet-like element, a plate or a plate-like element, for instance. The thickness of the at least one thermal isolation element is chosen to achieve desired thermal isolation properties. According to a concrete example, the thickness of the at least one thermal isolation element can range between 1 mm and 50 mm, particularly between 1 mm and 45 mm, more particularly between 1 mm and 40 mm, more particularly between 1 mm and 35 mm, more particularly between 1 mm and 30 mm, more particularly between 1 mm and 25 mm, more particularly between 1 mm and 20 mm, more particularly between 1 mm and 15 mm, more particularly between 1 mm and 10 mm, more particularly between 1 mm and 5 mm. Typically the design, shape, etc. of the at least one thermal isolation element will be adapted to the design, shape, etc. of the second face of the at least one wall element of the at least one mold member such that the at least one thermal isolation element can directly abut the second face of the at least one wall element of the at least one mold member.

The design of the at least one mold member and mold, respectively thus, while kept relatively easy, which enables advantages with respect to designing and manufacturing the mold, takes into account of the energy consumption for tempering the at least one mold member and mold, respectively, e.g. for performing respective heating and/or cooling cycles of the at least one wall element of the at least one mold member via a tempering medium flowing through the channel structure. In other words, the at least one mold member and mold, respectively is designed under consideration of aspects relating to the energy consumption for operating the mold, particularly with respect to respective heating and/or cooling cycles of the at least one wall element of the at least one mold member, and thus, under consideration of aspects enabling a sustainable operation of the mold.

The mold can further comprise at least one additional structural element attached to the second face of the at least one wall element of the at least one mold member for supporting the at least one thermal isolation element. The at least one additional structural element, which can also be deemed a support element, is typically directly disposed on the at least one thermal isolation element, particularly on a second face of the at least one thermal isolation element, the second face of the at least one thermal isolation element not facing the second face of the at least one wall element of the at least one mold member. The at least one thermal isolation element is thus, typically arranged between the second face of the at least one wall element of the at least one mold member and the at least one additional structural element for providing thermally isolation and typically also sealing of the at least one recess and channel structure, respectively. The second face of the of the at least one wall element of the at least one mold member can thus, be provided with a layered or stacked arrangement of at least two different elements, namely the at least one thermal isolation element which is, in terms of a first layer providing thermal isolation, directly disposed on the second face of the at least one wall element of the at least one mold member, and the at least one additional structural element which is, in terms of a second layer providing mechanical support, particularly for the at least one thermal isolation element, directly disposed on the at least one thermal isolation element. Hence, the at least one additional structural element can have higher structural properties, particularly a higher mechanical stability, more particularly a higher strength and/or stiffness, than the at least one thermal isolation element. As such, the structural properties, particularly the mechanical properties, of the at least one thermal isolation element can be kept (relatively) low since the required structural support capability, particularly the mechanical support capability, can be provided via the at least one additional structural element. However, it is not necessarily required that the at least one additional structural element is provided with anti-corrosive properties with respect to the tempering medium flowing through the at least one recess and channel structure, respectively because the at least one thermal isolation element, which directly closes and typically seals the at least one recess and channel structure, respectively is typically provided with respective anti-corrosive properties. As such, the anti-corrosive properties of the at least one additional structural element can be kept (relatively) low since the required anti-corrosion capability, can be provided via the at least one thermal isolation element.

The concrete geometric design of the at least one additional structural element can also be a sheet, a sheet-like element, a plate or a plate-like element, for instance. The thickness of the at least one additional structural element is chosen to achieve desired structural support properties. According to a concrete example, the thickness of the at least one additional structural element can range between 1 mm and 50 mm, particularly between 1 mm and 45 mm, more particularly between 1 mm and 40 mm, more particularly between 1 mm and 35 mm, more particularly between 1 mm and 30 mm, more particularly between 1 mm and 25 mm, more particularly between 1 mm and 20 mm, more particularly between 1 mm and 15 mm, more particularly between 1 mm and 10 mm, more particularly between 1 mm and 5 mm. Typically the design, shape, etc. of the at least one additional structural element will be adapted to the design, shape, etc. of the thermal isolation element such that the at least one additional structural element can directly abut the at least one thermal isolation element, particularly a second face of the at least one thermal isolation element, the second face of the at least one thermal isolation element not facing the second face of the at least one wall element of the at least one mold member.

The at least one wall element of the at least one mold member can be made from a metal, particularly a light metal, more particularly aluminum or an aluminum alloy. Light metals, such as particularly aluminum or aluminum alloys, show advantages, such as easy machinability which means that the at least one mold member can be easily provided with the at least one recess via machining processes, such e.g. as milling, good thermal conductivity which means that the at least one mold member can be efficiently tempered, and good corrosion properties which means that the risk of corrosion of the at least one mold member is reduced. Of course, also the relative low weight is advantageous when it comes to handling of the at least one mold member, e.g. for installation purposes. However, it is also contemplated that the at least one wall element of the at least one mold member can be made of other thermally conductive materials or material structures. As an example, other metals (non-light metals), such as iron-based metals, thermally conductive polymers, ceramics, etc. could be used for manufacturing the at least one wall element of the at least one mold member. As another example, the at least one wall element of the at least one mold member can be made from polymer materials, such as high-performance polymer materials, e.g. based on as polyamide, polyetherimide, polyether-ether-ketone, etc. Respective polymer materials can comprise one or more additives influencing the mechanical and/or thermal properties of the at least one wall element. Respective additives can comprise particles, particularly thermally conductive particles, more particularly carbon particles, metal particles, refractory ceramic particles etc., and/or fibers, particularly thermally conductive fibers, more particularly carbon fibers, metal fibers, etc.

The at least one recess can be a machined portion, particularly a milled portion, of the at least one wall element of the at least one mold member. The at least one recess can thus, be built via a machining operation, particularly a milling operation, which not only enables, as mentioned above, easy formation of the at least one recess but also having multiple geometric degrees of freedom when forming the at least one recess. In other words, the second face of the at least one wall element of the at least one mold member can be provided with one or more recesses of complex geometry.

The at least one thermal isolation element can be made from a polymer material or a polymer material structure. A respective polymer material or a respective polymer material structure can be based on a thermoplastic or thermosetting polymer or a thermoplastic or thermosetting polymer material structure. To achieve good thermal isolation properties, polymer materials or polymer material structures exhibiting a low coefficient of thermal conductivity are of advantage. As a concrete example, fluoropolymers, particularly based on tetrafluoroethylene, can be used for manufacturing the at least one thermal isolation element; the at least one thermal isolation element can thus, be made from a fluoropolymer, particularly based on tetrafluoroethylene, for instance. Polymer materials can comprise one or more additives influencing the mechanical properties and/or the thermal properties, e.g. the heat resistance, of the at least one thermal isolation element. Respective additives can comprise particles, particularly organic particles such as carbon particles, and/or inorganic particles, more particularly metal particles, talcum, etc., and/or fibers more particularly carbon fibers, metal fibers, glass fibers etc

The at least one additional structural element can be made from a metal, particularly a light metal, more particularly aluminum or aluminum alloy. As such, the at least one additional structural element can be provided with the required structural properties, particularly mechanical properties, for performing the intended support function of the at least one thermal isolation element. However, it is also conceivable that the at least one additional structural element is made from a polymer material or a polymer material structure. In this respect, polymer materials or polymer material structures showing good mechanical and/or thermal stability are advantageous. Respective polymer materials or polymer materials can comprise, so-called high-performance polymers such as polyamide, polyetherimide, polyether-ether-ketone, etc. Respective polymer materials can comprise one or more additives influencing the mechanical and/or thermal properties of the at least one additional structural element. Respective additives can comprise particles, particularly organic particles such as carbon particles, and/or inorganic particles, more particularly metal particles, talcum, etc., and/or fibers more particularly carbon fibers, metal fibers, glass fibers etc.

Returning to the configuration of the second face of the at least one wall element of the at least one mold member, the second face can comprise multiple recesses, i.e. a first recess and at least one further recess. In such an embodiment, a (single) thermal isolation element can be assigned to both the first and the at least one further recess for thermally isolating the first and the at least one further recess and channel structures, respectively. As such, a single thermal isolation element can be used for covering and closing, respectively multiple recesses. This embodiment can comprise that a (single) thermal isolation element covers the entire second face of the at least one wall element of the at least one mold member. This embodiment can thus, comprise that (essentially) the complete second face of the at least one wall element of the at least one mold member is thermally isolated. This also means that the at least one wall element of the at least one wall element can be thermally isolated from a steam chamber disposed adjacent to the second face of the at least one wall element. Notably, the (single) thermal isolation element can comprise one or more openings assigned to and thus, communicating one or more through-holes of the at least one wall element of the at least one mold member which through-holes may e.g. serve for supplying a process medium into the at least one cavity.

In an alternate embodiment, a first thermal isolation element is assigned to the first recess for thermally isolating the first recess and first channel structure, respectively and at least one further thermal isolation element is assigned to the at least one further recess for thermally isolating the at least one further recess and channel structure, respectively. This configuration can particularly, be of advantage when respective recesses are arranged with a relative large distance in between which would require a thermal isolation element of relative large dimensions to cover and close the recesses and channels or channel structures, respectively. This embodiment can thus, comprise the second face of the at least one wall element comprises freely exposed portions which are not covered by the at least thermal isolation element.

Likewise, an additional structural element can be assigned to both a first and the at least one further recess for supporting a respective thermal isolation element. In such an embodiment, a (single) additional structural element can be assigned to both the first and the at least one further recess for supporting one or more respective thermal isolation elements covering and closing, respectively multiple recesses. As such, a single additional structural element can be used for supporting one or more respective thermal isolation elements covering and closing, respectively multiple recesses.

In an alternate embodiment, a first additional structural element is assigned to the first recess for supporting one or more respective thermal isolation elements covering and closing, respectively and thermally isolating the first recess and first channel structure, respectively, and at least one further additional structural element is assigned to the at least one further recess for supporting one or more respective thermal isolation elements covering and closing, respectively and thermally isolating the at least one further recess and further at least one further channel structure, respectively. Again, this configuration can particularly, be of advantage when respective recesses are arranged with a relative large distance in between which would require an additional structural element of relative large dimensions to support one or more respective thermal isolation elements covering and closing the recesses and channel structures, respectively.

It has been indicated that the second face of the at least one wall element of the at least one mold member can be provided with multiple recesses. In such an embodiment, a respective first recess and at least one further recess can be arranged at an angle relative to each other. As such, parallel and non-parallel arrangements of respective recesses and channel structures, respectively are conceivable also enabling providing the at least one wall element of the at least one mold member with multiple tempering circuits, each comprising at least one channel structure, enabling separate or parallel heating and/or cooling of specific regions of the at least one mold member. A non-parallel arrangement of recesses can result in that at least two recesses are intersecting at one or more intersection points which will typically result in that the at least two recesses and channel structures, respectively are communicating with each other.

In embodiments with multiple recesses, a first and at least one further recess can be identical or differ in at least one of the following parameters: depth, width, length, shape, cross-sectional shape, spatial extension within the second face, for instance. Hence, there are multiple degrees of freedom in providing the at least one wall element of the at least one mold member with respective recesses which is a possible mean for providing the at least one mold member with highly specific tempering properties.

The at least one thermal isolation element can be detachably attached to the at least one wall element of the at least one mold member. This enables easy installation and de-installation of the at least one thermal isolation element, the latter being relevant for service and/or repair works, for instance. Particularly, the at least one thermal isolation element can be detachably attached to the at least one wall element of the at least one mold member via a mechanical attachment. As an example, the at least one thermal isolation element can be attached to the at least one wall element of the at least one mold member via bolting, clamping, pressing, etc.

Likewise, the at least one additional structural element can be detachably attached to the at least one wall element of the at least one mold member. This enables easy installation and de-installation of at least one additional structural element, the latter being relevant for service and/or repair works, for instance. Notably, the at least one additional structural element can be directly attached to the at least one wall element of the at least one mold member or indirectly attached to the at least one wall element of the at least one member by being directly attached to the at least one thermal isolation element. Particularly, the at least one additional structural element can be detachably attached to the at least one wall element of the at least one mold member or the at least one thermal isolation element via a mechanical attachment. As an example, the at least one additional structural element can be attached to the at least one wall element of the at least one mold member or the at least one thermal isolation element via bolting, clamping, pressing, etc. However, the at least one additional structural element can be attached to the at least one thermal isolation element also by gluing, soldering, welding, etc.

In either case, the second face of the at least one wall element of the at least one mold member can be provided with one or more attachment sites (each) enabling a respective attachment of the at least one thermal isolation element and/or the at least one additional structural element, respectively. A respective attachment site can be or comprise one or more specific surface structures, (threaded) bores, undercuts, etc.

In a concrete exemplary embodiment, the at least one additional structural element, can be bolted to the at least one wall element of the at least one mold member by one or more bolts penetrating through respective openings, e.g. bores, provided in at least one thermal isolation element such that the at least one thermal isolation element is or can be clamped to the second face of the at least one wall element of the at least one mold member by fastening respective bolts for attaching the at least one additional structural element to the at least one wall element of the at least one mold member.

The at least one wall element of the at least one mold member can comprise at least one through-hole communicating with the cavity for supplying a process medium into the cavity. A respective process medium can serve different purposes. As an example, a respective process medium can serve for combining respective expandable or expanded polymer beads provided within the cavity. A respective process medium can be a heated medium, such as e.g. steam, for providing thermal energy into the cavity which results in that the expandable or expanded polymer beads combine under formation of a particle foam component. As another example, a respective process medium can serve for cooling of the cavity and a just formed particle foam component disposed therein. A respective process medium can be a cooling medium, such as e.g. a gas or a liquid, such as e.g. water, for removing excess thermal energy from the cavity which results in that the particle foam component consolidates. As another example, a respective process medium can serve for drying the cavity, e.g. after removal of a particle foam component. A respective process medium can be a gas, e.g. (pressurized) air, removing excess moisture from the cavity which results in that the cavity is dried.

Likewise, the at least one wall element of the at least one mold member can comprise at least one through-hole communicating with the cavity for supplying expandable or expanded polymer beads into the cavity. Hence, the or at least one respective through-hole can serve for filling the cavity with expandable or expanded polymer beads which are then processed in the cavity to form a particle foam component.

Each respective through-hole typically extends through the entire wall thickness of the at least one wall element of the at least one mold member. The at least one through-hole thus, provides an inlet of one or more process media, such as e.g. steam, and/or expandable or expanded polymer beads to be introduced into the cavity before, during, or after operation of the mold. The at least one through-hole typically extends transverse of a base plane of the at least one wall element. In exemplary configurations, the at least one at least one wall element of the at least one mold member will have separate through-holes for introducing one or more process media and expandable or expanded polymer beads to be into the cavity.

The at least one mold member can further comprise a further wall element facing the second face of the at least one wall element, wherein the at least one wall element and the further wall element define a receiving volume for receiving a process medium to be introduced into the cavity during operation of the mold. A respective receiving volume can form a so-called steam chamber in which steam to be introduced into the cavity for combining respective expandable or expanded polymer beads to form a particle foam component is generated and/or stored.

The mold can comprise a base structure, particularly a base plate, more particularly a mold plate, comprising at least one receiving section for receiving the at least one wall element and the at least one mold member, respectively. As such, the at least one wall element and the at least one mold member, respectively can be designed and shaped as an insert which is to be received in a respective receiving section of respective base structure. Hence, the at least one receiving section can be built as comprise a recess configured to receive the at least one wall element and the at least one mold member, respectively. This configuration provides the mold with more flexibility with respect to using different mold members for different molding applications and/or molding purposes. Further, mold members can be easily replaced e.g. in case of damage and/or failure.

The base structure can be provided with one or more channels for at least one process medium, particularly a tempering medium, wherein the one or more channels are arranged to communicate with the at least one channel structure of the at least one wall element of the at least one mold member such that a tempering medium can flow from the one or more channels into the at least one channel structure of the at least one wall element of the at least one mold member or vice versa. Respective channels of the base structure and/or respective channels of the channel structure of the at least one wall element of the at least one mold member can be arranged and/or shaped to enable a high tempering efficiency. As an example, the arrangement, shape, and/or network of the channels of a respective channel structure can be chosen such that a fast tempering of the at least one wall element of the at least one mold member is possible.

Respective channels of the base structure can have one or more inlet portions. An inlet manifold structure can be assigned to the one or more inlet portions. The inlet manifold structure can enable that a specific process medium enters the channels of the base structure and further the channel structure of the at least one mold member. Also, respective channels of the base structure can have one or more outlet portions. An outlet manifold structure can be assigned to the one or more outlet portions. The outlet manifold structure can enable that a specific process medium exits the channel structure of the at least one mold member and further the channels of the base structure.

A second aspect of the invention relates to an apparatus, particularly steam-chest molding apparatus, for processing expandable or expanded polymer beads to form a particle foam component. The apparatus comprises at least one mold according to the first aspect of the invention. The apparatus can further comprise at least one tempering device, e.g. a vario-thermal tempering device, for tempering a process medium, particularly a tempering medium, to be introduced into the at least one channel structure of the at least one wall element of the at least mold member. Further, the apparatus can comprise at least one hardware- and/or software-implemented controller for controlling operation of the apparatus. The at least one controller can particularly, be configured for implementing different operating modes of the apparatus and mold, respectively. Respective operating modes can comprise a heating mode, in which the at least one wall element of the at least one mold member is heated, e.g. for pre-heating the cavity and/or for combining beads to form a particle foam component; and a cooling mode, in which the at least one wall element of the at least one mold member is cooled, e.g. for cooling the cavity after formation of a particle foam component. Also, a drying mode in which the cavity is dried is conceivable.

A third aspect of the invention relates to the use of at least one mold according to the first aspect of the invention and/or an apparatus according to the second aspect of the invention for processing expandable or expanded polymer beads to form a particle foam component. Hence, all annotations concerning the mold according to the first aspect of the invention also apply to the apparatus according to the second aspect of the invention and/or to the use according to the third aspect of the invention and vice versa.

With these and other advantages and features that will become hereinafter apparent, a more complete understanding of the invention can be obtained by referring to the following description of the appended drawings in which:
Fig. 1a, 1b show principle drawings of a mold according to an exemplary embodiment, with Fig. 1a showing a sectional-view of the mold, and Fig. 1b showing an enlarged sectional-view of the detail of Fig. 1a;
Fig. 2a, 2b show two perspective views of a wall element of a mold member according to an exemplary embodiment;
Fig. 3a, 3b show principle drawings of a base structure receiving a mold member according to an exemplary embodiment, with Fig. 3a showing a top-view of the base structure and Fig. 3b showing a sectional-cut view along lines A-A in Fig. 3a; and
Fig. 4 shows a principle drawing of a wall element of a mold member according to another exemplary embodiment.

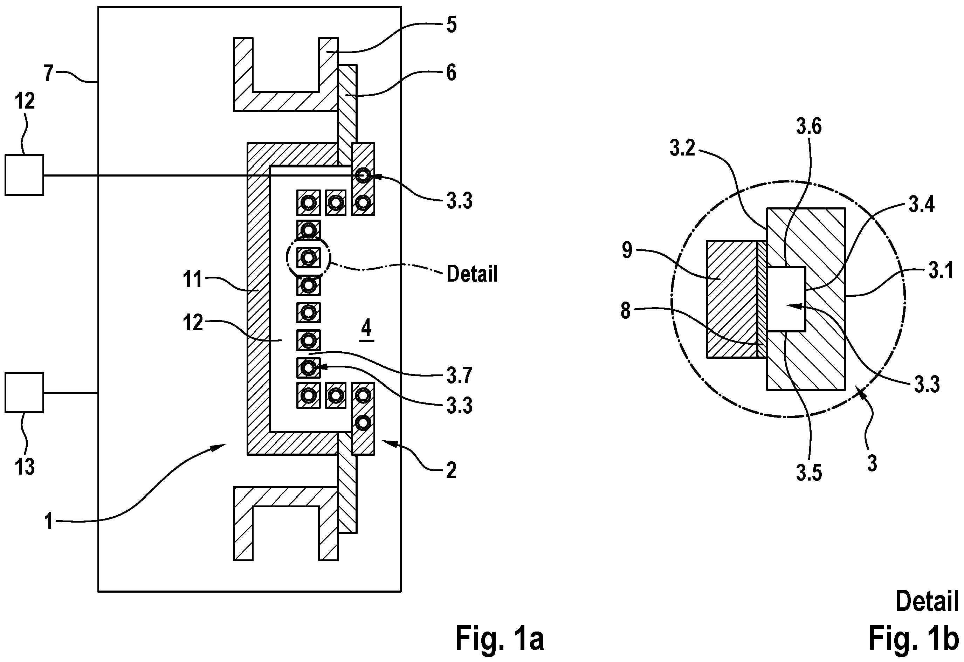

Fig. 1a and 1b show principle drawings of a mold 1 according to an exemplary embodiment. More specifically, Fig. 1a show a sectional-view of the mold 1 and Fig. 1b shows an enlarged sectional-view of a wall element 3 of a mold member 2 of the mold 1. Fig. 1b is particularly a detail of the encircled portion of Fig. 1a.

The mold 1 is generally configured for processing expandable or expanded polymer beads to form a particle foam component. Processing respective expandable or expanded polymer beads to form a particle foam component generally, comprises combining the expandable or expanded polymer beads in a cavity 4 of the mold 1 under specific chemical and/or physical conditions such that a particle foam component is formed. The mold 1 can be a steam-chest mold, i.e. a mold 1 configured for performing steam-chest processes in which expandable or expanded polymer beads are combined under specific physical conditions, particularly specific thermal conditions, to form a particle foam component.

The mold 1 comprises at least one mold member 2 comprising wall element 3 having a first contour or first face 3.1, respectively which at least partly delimits the cavity 4 which is fillable or to be filled, respectively with expandable or expanded polymer beads to be processed with the mold 1 to form a particle foam component during operation of the mold. The first face 3.1 of the mold member 2 thus, has a shape which at least partly reflects the shape of the particle foam component to be manufacturing with the mold 1. The first face 3.1 of the mold member 2 thus, also has a shaping function with respect to the processing of the expandable or expanded polymer beads to form a particle foam component.

Even though not shown in the drawings, the mold 1 typically comprises at least one further mold member which comprises at least one further wall element having a further first contour or further first face, respectively which at least partly delimits the cavity 4. Typically the first face of the at least one further mold member has a shape which at least partly reflects the shape of the particle foam component to be manufacturing with the mold 1. The first face of the at least one further mold member thus, can also have a shaping function with respect to the processing of the expandable or expanded polymer beads to form a particle foam component.

The mold member 2 shown in the drawings can be deemed a first mold member, the at least one further mold member can be deemed a second mold member. Respective first and second mold members can also be deemed a first mold halve and a second mold halve, respectively. At least one of the at least one first mold member and the at least one second mold member can be moveably supported in at least one degree of freedom of motion so as to (reversibly) transfer the mold 1 in a closed state and in an open state. Processing of the expandable or expanded polymer beads to form a particle foam component typically occurs in the closed state. In the open state, a respectively formed particle foam component can be removed from the mold. A drive device, e.g. an electric, hydraulic, or pneumatic drive device, can be assigned to the mold 1 to effect transferring the mold in its closed and open state, respectively.

As is apparent from Fig. 1a, the mold member 2 can be attached to a base structure 6 which can be attached to a machine frame 5 of a superordinate apparatus 7, particularly a steam-chest apparatus, for processing expandable or expanded polymer beads to form a particle foam component via steam-chest molding.

The configuration of the mold member 2 will be explained in more detail in the following. All remarks regarding the mold member 2 can also apply to any other mold member of the mold 1.

As is particularly apparent from the enlarged view of Fig. 1b, the wall element 3 also has a second face 3.2, particularly opposing the first face 3.1, which is provided with a recess 3.3 defining a channel structure for a tempering medium, e.g. a gas and/or a liquid, for tempering the mold member 2. As such, the wall element 3 can be tempered, i.e. heated and/or cooled, via a tempering medium flowing through the channel structure which is at least partly defined by the recess 3.3 provided with the second face 3.2 of the wall element 3, by providing the second face 3.2 of the wall element 3 with a respective recess 3.3, the wall element 3 can be provided with a tempering structure for a respective tempering medium, the tempering structure being built through the channel structure defined by the recess 3.3. As is apparent from Fig. 1b, the recess 3.3 can e.g. by provided by a groove, a slit, or any other geometry which reduces the cross-section of the wall element 3 to generate a respective channel structure for a tempering medium for tempering the mold member 2. The concrete geometric configuration of the channel structure is thus, defined by the concrete geometric configuration of the recess 3.3. In other words, geometric parameters of the recess 3.3, such as but not limited to length, width, depth, shape, cross-sectional shape, etc. also define respective geometric parameters of the channel structure.

As is discernible from Fig. 1a, the second face 3.2 of the wall element 3 can be provided with multiple respective recesses 3.3. In case of multiple recesses 3.3, each recess 3.3 can build a channel of the channel structure. One or more recesses 3.3 of the multiple recesses can communicate with each other to form a channel structure having a network of communicating channels.

Notably, given that the channel structure is built through the recess 3.3 in the second face 3.2 of the wall element 3, the channel structure and its one or more channels, respectively is/are typically open (see e.g. Fig. 1b). Particularly, the recess 3.3 comprises an open cross-section defined by one or more wall portions 3.4 - 3.6 of the wall element 3. More particularly, Fig. 1b shows that a first wall portion 3.4 of the wall element 3 can define a bottom portion of the recess 3.3 or channel structure, respectively and further wall portions 3.5, 3.6 of wall element 3 which extend at an angle relative to the first wall portion 3.4 define side portions of the recess 3.3 or channel structure, respectively. Fig. 1b further shows that the first wall portion 3.4 of the wall element 3 can be arranged and/or oriented parallel to the first face 3.1 of the wall element 3. Fig. 1b further shows that the further wall portions 3.4, 3,6 of the wall element 3 can be arranged and/or oriented parallel to each other. Hence, the cross-sectional geometry of the recess 3.3 or channel structure, respectively can be defined by shape and/or arrangement of the first and further wall portions 3.4 - 3.6.

The Fig. show that the recess 3.3 can have a cross-sectional basic shape which is polygonal, particularly rectangular, for instance. It is however also conceivable that the recess 3.3 has a cross-sectional basic shape which is curved. It is further conceivable that the cross-sectional geometry or shape of the recess 3.3 or the channel structure, respectively can change along its extension in at least one specific extension direction. A respective change of the cross-sectional geometry or shape can be used to concertedly influence the flow properties, e.g. flow velocity, flow profile, etc., of a tempering medium flowing through the recess or channel structure, respectively for instance.

To close the recess and channel structure with its one or more channels, respectively, the mold member 2 comprises a thermal isolation element 8 attached to the second face 3.2 of the wall element 3. The thermal isolation element 8 is configured for closing and thermally isolating the recess 3.3 to form a closed channel structure, particularly against thermal losses via the second face 3.2 of the wall element 3 and thus, thermal losses towards any other element which is possibly attached to the second face 3.2 of the wall element 3. The respective channel structure is thus, delimited by the wall element portions 3.4 - 3.6 defining the recess 3.3 and one or more wall portions of the thermal isolation element 8 attached to the second face 3.2 of the wall element 3.

Hence, the design of the mold 1 is special in that the closing of the recess 3.3 is effected through a thermal isolation element 8 which serves two functions, namely: closing or covering the recess 3.3 to form a closed channel structure, wherein closing or covering the recess 3.3 can optionally comprise sealing the recess and the closed channel structure, respectively; and further, thermally isolating the closed channel structure to keep the thermal energy provided through a tempering medium flowing through the closed channel structure in the wall element 3 and thus, avoid or at least reduce thermal losses via the second face 3.2 of the wall element 3. As will be apparent from further below, the thermal isolation element 8 is thus, formed from a material or material structure, or comprises same, which at least enables closing or covering the recess 3.3 and thermally isolating the wall element 3 against thermal losses via the second face 3.2 of the wall element 3.

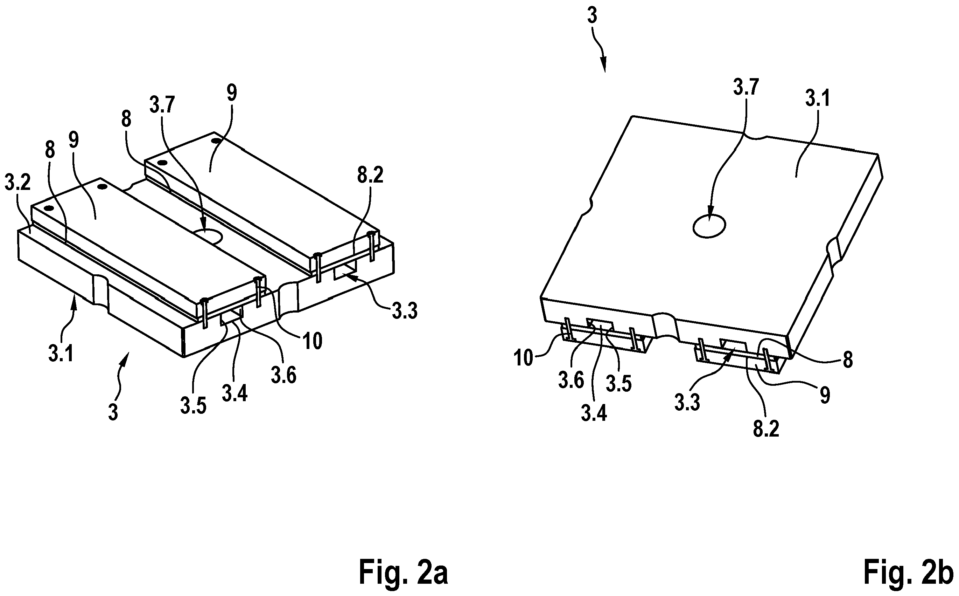

As is particularly apparent from Fig. 2a, 2b, the concrete geometric design of the thermal isolation element 8 can comprise a sheet, a sheet-like element, a plate or a plate-like element. The thickness of the thermal isolation element 8 is chosen to achieve desired thermal isolation properties. According to a concrete example, the thickness of the thermal isolation element 8 can range between 1 mm and 30 mm. Fig. 2a, 2b also show that the design, shape, etc. of the thermal isolation element 8 is adapted to the design, shape, etc. of the second face 3.2 of the wall element 3 such that the thermal isolation element 8 can directly abut the second face 3.2 of the wall element 3.

The design of the mold member 2 and mold 1, respectively thus, while kept relatively easy which enables advantages with respect to designing and manufacturing the mold 1, takes into account of the energy consumption for tempering the mold 1, e.g. for performing respective heating and/or cooling cycles of the wall element 3 of the mold member 2 via a tempering medium flowing through the channel structure. In other words, the mold member 2 and mold 1, respectively is designed under consideration of aspects relating to the energy consumption for operating the mold 1, particularly with respect to respective heating and/or cooling cycles of the wall element 3 of the mold member 2, and thus, under consideration of aspects enabling a sustainable operation of the mold 1.

As is apparent from the drawings, the mold 1 can further comprise an additional structural element 9 attached to the second face 3.2 of the wall element 3 for supporting the thermal isolation element 8. The additional structural element 9, which can also be deemed a support element, is typically directly disposed on the thermal isolation element 8, particularly on a second face 8.2 of the thermal isolation element 8, the second face 8.2 of the thermal isolation element 8 not facing the second face 3.2 of the wall element 3. The thermal isolation element 8 is thus, arranged between the second face 3.2 of the wall element 3 and the additional structural element 9 for providing thermally isolation and typically also sealing of recess 3.3 and channel structure, respectively. The second face 3.2 of the wall element 3 can thus, be provided with a layered or stacked arrangement of at least two different elements, namely the thermal isolation element 8 which is, in terms of a first layer providing thermal isolation, directly disposed on the second face 3.2 of the wall element 3, and the additional structural element 9 which is, in terms of a second layer providing mechanical support, particularly for the thermal isolation element 8, directly disposed on the thermal isolation element 8. Hence, the additional structural element 9 can have higher structural properties, particularly a higher mechanical stability, more particularly a higher strength and/or stiffness, than the thermal isolation element 8. As such, the structural properties, particularly the mechanical properties, of the thermal isolation element 8 can be kept (relatively) low since the required structural support capability, particularly the mechanical support capability, can be provided via the additional structural element 9. However, it is not necessarily required that the additional structural element 9 is provided with anti-corrosive properties with respect to the tempering medium flowing through the recess and channel structure, respectively because the thermal isolation element 8, which directly closes and typically seals the recess and channel structure, respectively is typically provided with respective anti-corrosive properties. As such, the anti-corrosive properties of the additional structural element 9 can be kept (relatively) low since the required anti-corrosion capability, can be provided via the thermal isolation element 8.

As is particularly apparent from Fig. 2a, 2b, the concrete geometric design of the additional structural element 9 can also comprise a sheet, a sheet-like element, a plate or a plate-like element, for instance. The thickness of the additional structural element 9 is chosen to achieve desired structural support properties. According to a concrete example, the thickness of the additional structural element 9 can range between 1 mm and 50 mm. Typically the design, shape, etc. of the additional structural element 9 will be adapted to the design, shape, etc. of the thermal isolation element 8 such that the additional structural element 9 can directly abut the thermal isolation element 8, particularly the second face 8.2 of the thermal isolation element 8, with the second face 8.2 of the thermal isolation element 8 not facing the second face 3.2 of the wall element 3.

The wall element 3 can be made from a metal, particularly a light metal, more particularly aluminum or an aluminum alloy. Light metals, such as particularly aluminum or aluminum alloys, show advantages, such as easy machinability which means that the mold member 2 can be easily provided with the recess 3 via machining processes, such e.g. as milling, good thermal conductivity which means that mold member 2 can be efficiently tempered, and good corrosion properties which means that the risk of corrosion of the mold member 2 is reduced. Of course, also the relative low weight is advantageous when it comes to handling of mold member 2, e.g. for installation purposes. However, it is also contemplated that the wall element 3 can be made of other thermally conductive materials or material structures. As an example, other metals (non-light metals), such as iron-based metals, thermally conductive polymers, ceramics, etc. could be used for manufacturing the wall element 3. Particularly, the wall element 3 can be made from polymer materials, such as high-performance polymer materials, e.g. based on as polyamide, polyetherimide, polyether-ether-ketone, etc. Respective polymer materials can comprise one or more additives influencing the mechanical and/or thermal properties of the at least one wall element. Respective additives can comprise particles, particularly thermally conductive particles, more particularly carbon particles, metal particles, refractory ceramic particles etc., and/or fibers, particularly thermally conductive fibers, more particularly carbon fibers, metal fibers, etc.

As such, the recess 3.3 can be a machined, particularly a milled portion, of the wall element 3. The recess 3.3 can thus, be built via a machining operation, particularly a milling operation, which not only enables, as mentioned above, easy formation of the recess 3.3 but also having multiple geometric degrees of freedom when forming the recess 3.3. In other words, the second face 3.2 of the wall element 3 can be provided with one or more recesses 3.3 of complex geometry.

The thermal isolation element 8 can be made from a polymer material or a polymer material structure. A respective polymer material or a respective polymer material structure can be based on a thermoplastic or thermosetting polymer or a thermoplastic or thermosetting polymer material structure. To achieve good thermal isolation properties, polymer materials or polymer material structures exhibiting a low coefficient of thermal conductivity are of advantage. As a concrete example, fluoropolymers, particularly based on tetrafluoroethylene, can be used for manufacturing the thermal isolation element 8; the thermal isolation element 8 can thus, be made from a fluoropolymer, particularly based on tetrafluoroethylene, for instance. Respective polymer materials can comprise one or more additives influencing the mechanical properties and/or the thermal properties, e.g. the heat resistance, of the thermal isolation element 8. Respective additives can comprise particles, particularly organic particles such as carbon particles, and/or inorganic particles, more particularly metal particles, talcum, etc., and/or fibers more particularly carbon fibers, metal fibers, glass fibers etc.

The additional structural element 9 can be made from a metal, particularly a light metal, more particularly aluminum or aluminum alloy. As such, the additional structural element 9 can be provided with the required structural properties, particularly mechanical properties, for performing the intended support function of the thermal isolation element 8. However, it is also conceivable that additional structural element 9 is made from a polymer material or a polymer material structure. In this respect, polymer materials or polymer material structures showing good mechanical and thermal stability are advantageous. Respective polymer materials or polymer materials can comprise, so-called high-performance polymers such as polyamide, polyetherimide, polyether-ether-ketone, etc. Respective polymer materials can comprise one or more additives influencing the mechanical properties and/or the thermal properties of the additional structural element 9. Respective additives can comprise particles, particularly organic particles such as carbon particles, and/or inorganic particles, more particularly metal particles, talcum, etc., and/or fibers more particularly carbon fibers, metal fibers, glass fibers etc-

Returning to the configuration of the second face 3.2 of the wall element 3, the second face 3.2 of the wall element 3 can comprise multiple recesses 3.3, i.e. a first recess and at least one further recess 3.2 (see Fig. 1a, 1b). In such an embodiment, a (single) thermal isolation element 8 can be assigned to both the first and the at least one further recess 3.3 for thermally isolating the first and the at least one further recess 3.3 channel structures, respectively. As such, a single thermal isolation element 8 can be used for covering and closing, respectively multiple recesses 3.3.

Likewise, an additional structural element 9 can be assigned to both a first and at least one further recess 3.3 for supporting a respective thermal isolation element 8. In such an embodiment, a (single) additional structural element 9 can be assigned to both the first and the at least one further recess 3.3 for supporting one or more respective thermal isolation elements 8 covering and closing, respectively multiple recesses 3.3. As such, a single additional structural element 9 can be used for supporting one or more respective thermal isolation elements 8 covering and closing, respectively multiple recesses 3.3.

In the embodiment of Fig. 1a, 1b, each recess 3.3 is provided with its own thermal isolation element 8. In other words, a first thermal isolation element 8 is assigned to a first recess 3.3 for thermally isolating the first channel structure, and at least one further thermal isolation element 8 is assigned to the at least one further recess 3.3 for thermally isolating the at least one further recess 3.3 and channel structure, respectively.

Further, a first additional structural element 9 is assigned to a first recess 3.3 for supporting the thermal isolation element 8 covering and closing, respectively and thermally isolating the first channel structure the at least one first recess 3.3 and channel structure, respectively, and at least one further additional structural element 9 is assigned to at least one further recess 3.3 for supporting one or more respective thermal isolation elements 8 covering and closing, respectively and thermally isolating the at least one further recess 3.3 and channel structure, respectively.

It has been indicated that the second face 3.2 of the wall element 3 be provided with multiple recesses 3.3. In such an embodiment, a respective first recess 3.3 and at least one further recess 3.3 can be arranged at an angle relative to each other. As such, parallel and non-parallel arrangements of respective recesses 3.3 and channel structures, respectively are conceivable also enabling providing the wall element 3 with multiple tempering circuits each comprising at least one channel structure, enabling separate or parallel heating and/or cooling of specific regions of the mold member 2. A non-parallel arrangement of recesses 3.3 can result in that at least two recesses 3.3 are intersecting at one or more intersection points which will typically result in that the at least two recesses 3.3 and channel structures, respectively are communicating with each other.

In embodiments with multiple recesses 3.3, a first and at least one further recess 3.3 can be identical or differ in at least one of the following parameters: depth, width, length, shape, cross-sectional shape, spatial extension within the second face, for instance. Hence, there are multiple degrees of freedom in providing the wall element 3 with respective recesses 3.3 which is a possible means for providing the mold member 2 with highly specific tempering properties.

Particularly referring to Fig. 2a, 2b, it is apparent that a respective thermal isolation element 8 can be detachably attached to the wall element 3 based on that it is attached to the wall element 3 via a bolted connection. This enables easy installation and de-installation of the thermal isolation element 8, the latter being relevant for service and/or repair works, for instance. Particularly, the thermal isolation element 8 can be detachably attached to the wall element 3 via a mechanical attachment.

Likewise, a respective additional structural element 9 can be detachably attached to the wall element 3. This enables easy installation and de-installation of the additional structural element 9, the latter being relevant for service and/or repair works, for instance. Notably, a respective additional structural element 9 can be directly attached to the wall element 3 or, as is exemplarily shown in Fig. 2a, 2b, indirectly attached to the wall element 3 by being directly attached to a respective thermal isolation element 8. Particularly, a respective additional structural element 9 can be detachably attached to a respective thermal isolation element 8 via a mechanical attachment. Particularly, a respective additional structural element 9 can be attached to a respective thermal isolation element 8 via bolting, for instance. However, a respective additional structural element 9 could also be attached to a respective thermal isolation element 8 by gluing, soldering, welding, etc.

In the concrete exemplary embodiment of Fig. 2a, 2b, respective additional structural elements 9 are bolted to the wall element 3 by one or more bolts 10 penetrating through respective openings, e.g. bores, provided in respective thermal isolation elements 8 such that the thermal isolation elements are or can be clamped to the second face 3.2 of the wall element 3 by fastening respective bolts 10 for attaching the respective additional structural elements 9 to the wall element 3.

In either case, the second face 3.2 of the wall element 3 can be provided with one or more attachment sites (each) enabling a respective attachment of a respective thermal isolation element 8 and/or a respective additional structural element 9, respectively. A respective attachment site can be or comprise one or more specific surface structures, (threaded) bores, undercuts, etc.

Fig. 2a, 2b further show that a respective wall element 3 can comprise at least one through-hole 3.7 communicating with the cavity 4 for supplying a process medium into the cavity 4. A respective process medium can serve different purposes. As an example, a respective process medium can serve for combining respective expandable or expanded polymer beads provided within the cavity 4. A respective process medium can be a heated medium, such as e.g. steam, for providing thermal energy into the cavity 4 which results in that the expandable or expanded polymer beads combine under formation of a particle foam component. As another example, a respective process medium can serve for cooling of the cavity 4 and a just formed particle foam component disposed therein. A respective process medium can be a cooled medium, such as e.g. a gas, for removing excess thermal energy from the cavity which results in that the particle foam component consolidates. As another example, a respective process medium can serve for drying the cavity 4, e.g. after removal of a particle foam component. A respective process medium can be a gas, e.g. (pressurized) air, removing excess moisture from the cavity 4 which results in that the cavity 4 is dried.

As is apparent from Fig. 2a, 2b, each respective through-hole 3.7 typically extends through the entire wall thickness of the wall element 3. The through-hole 3.7 thus, provides an inlet of one or more process media, such as e.g. steam, and/or expandable or expanded polymer beads to be introduced into the cavity 4 before, during, or after operation of the mold 1. Fig. 2a, 2b further shows that a respective through-hole 3.7 typically extends transverse of a base plane of the wall element 3.

Likewise, a respective wall element 3 can comprise at least one through-hole communicating with the cavity 4 for supplying expandable or expanded polymer beads into the cavity 4. Hence, the or at least one respective through-hole can serve for filling the cavity 4 with expandable or expanded polymer beads which are then processed in the cavity 4 to form a particle foam component.

Returning to Fig. 1a, it is apparent that the mold member 2 can further comprise a further wall element 11 facing the second face 3.2 of the wall element 3, wherein the wall element 3 and the further wall element 11 define a receiving volume 12 for receiving a process medium to be introduced into the cavity 4 during operation of the mold 1. A respective receiving volume 12 can form a so-called steam chamber in which steam to be introduced into the cavity 4 for combining respective expandable or expanded polymer beads to form a particle foam component is generated and/or stored.

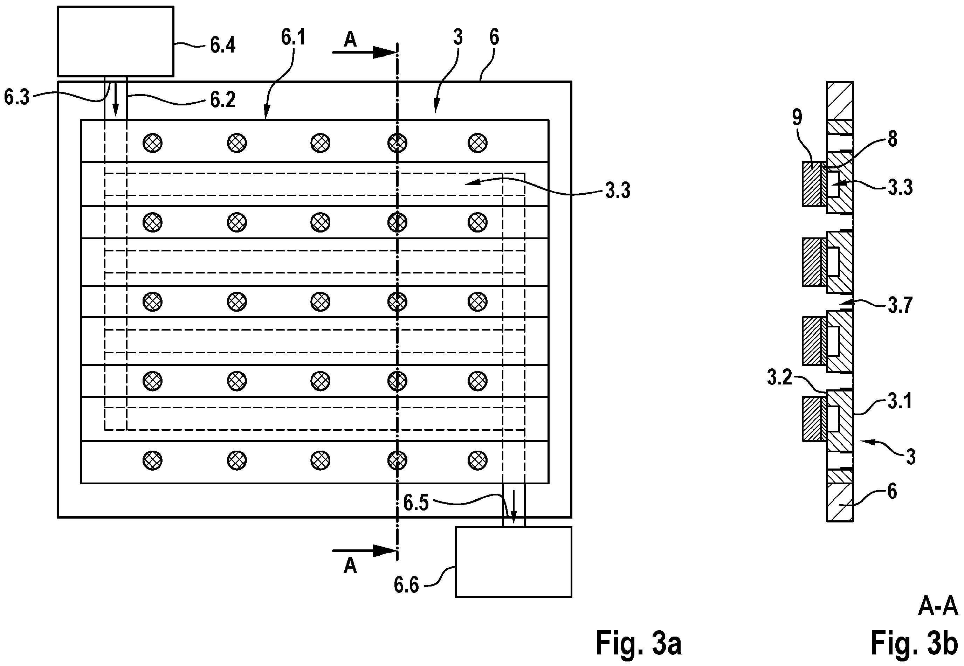

Fig. 3a, 3b show that the mold 1 can comprise the base structure 6 already mentioned above. The base structure 6 can be or comprise a base plate which comprises at least one receiving section 6.1 for receiving at least one respective wall element 3 and the at least one mold member 2, respectively. As such, a respective wall element 3 and mold member 2, respectively can be designed and shaped as an insert which is to be received in a respective receiving section 6.1. Hence, a respective receiving section 6.1 can be built as comprise a recess configured to receive a respective wall element 3 and mold member 2, respectively. This configuration provides the mold 1 with more flexibility with respect to using different mold members 2 for different molding applications and/or molding purposes. Further, mold members 2 can be easily replaced e.g. in case of damage and/or failure.

Fig. 3a, 3b further show that the base structure 6 can be provided with one or more channels 6.2 for at least one process medium, particularly a tempering medium, wherein the one or more channels 6.2 are arranged to communicate with the channel structure of the wall element 3 of the respective mold member 2 such that a tempering medium can flow from the one or more channels 6.2 into the channel structure of the wall element 3 of the mold member 2 or vice versa. Respective channels 6.2 of the base structure 6 can have one or more inlet portions 6.3. An inlet manifold structure 6.4 can be assigned to the one or more inlet portions 6.3. The inlet manifold structure 6.4 can enable that a specific process medium enters the channels 6.2 of the base structure 6 and further the channel structure of the mold member 2. Also, respective channels 6.2 of the base structure 6 can have one or more outlet portions 6.5. An outlet manifold structure 6.6 can be assigned to the one or more outlet portions 6.5. The outlet manifold structure 6.6 can enable that a specific process medium exits the channel structure of the mold member 2 and further the channels 6.2 of the base structure 6.

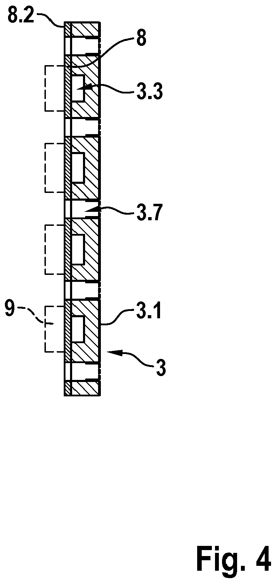

Fig. 4 shows a principle drawing of a wall element 3 of a mold member 2 according to another exemplary embodiment in a cut-view similar to the cut-view of Fig. 3b. Fig. 4 particularly, refers to an embodiment in which the second face 3.2 of the wall element 3 is (essentially) completely covered by a thermal isolation element 8. The thermal isolation element is attached to the second face 3.2 of the wall element 3 and comprises openings which are assigned to and communicate with respective through-holes 3.7 of the wall element 3. Fig. 4 also shows that second face 8.2 of the thermal isolation element 8 could be provided with one or more additional structural elements 9.

Fig. 1a further indicates the superordinate apparatus 7, which can be a steam-chest molding apparatus, for processing expandable or expanded polymer beads to form a particle foam component. The apparatus 7 comprises at least one mold 1 and can further comprise at least one tempering device 12, e.g. a vario-thermal tempering device, for tempering a process medium, particularly a tempering medium, to be introduced into the channel structure of the wall element 3 of the member 2. Further, the apparatus 7 can comprise at least one hardware- and/or software-implemented controller 13 for controlling operation of the apparatus 7. The controller 13 can particularly, be configured for implementing different operating modes of the apparatus 7 and mold 1, respectively. Respective operating modes can comprise a heating mode, in which the wall element 3 of the mold member 2 is heated, e.g. for pre-heating the cavity 4 and/or for combining beads to form a particle foam component; and a cooling mode, in which the wall element 3 of the mold member 2 is cooled, e.g. for cooling the cavity 4 after formation of a particle foam component. Also, a drying mode in which the cavity 4 is dried is conceivable.

One, more, or all features of a specific embodiment can be combined with one, more, or all features of at least one further embodiment.

## Claims

1. A mold, particularly a steam-chest mold, for processing expandable or expanded polymer beads to form a particle foam component, the mold comprising:
at least one mold member comprising at least one wall element having a first face at least partly delimiting a cavity of the mold which is to be filled with expandable or expanded polymer beads to form a particle foam component during operation of the mold,
wherein the at least one wall element has a second face, particularly opposing the first face, which is provided with at least one recess defining a channel structure for a tempering medium for tempering the at least one mold member, further comprising:
at least one thermal isolation element attached to the second face of the at least one wall element for closing and thermally isolating the at least one recess to form a closed channel structure.

2. The mold according to claim 1, further comprising at least one additional structural element attached to the second face of the at least one wall element for supporting the at least one thermal isolation element; wherein
the at least one thermal isolation element is arranged between the additional structural element and the second face of the at least one wall element for thermally isolating the at least one channel structure recess.

3. The mold according to any one of the preceding claims, wherein the at least one recess is a machined, particularly a milled portion, of the at least one wall element.

4. The mold according to any one of the preceding claims, wherein the thermal isolation element is made from a polymer material, particularly a fluoropolymer material, or a polymer material structure.

5. The mold according to any one of the preceding claims, wherein the additional structural element is made from a metal, particularly light metal, more particularly aluminum or aluminum alloy, or a polymer.

6. The mold according to any one of the preceding claims, wherein the at least one thermal isolation element has a plate- or plate-like shape and/or wherein the at least one additional structural element has a plate- or plate-like shape.

7. The mold according to any one of the preceding claims, comprising a first and at least one further recess, wherein the at least one thermal isolation element is assigned to both the first and the at least one further recess for thermally isolating the first and the at least one further channel structure; or comprising a first and at least one further recess, wherein a first thermal isolation element is assigned to the first recess for thermally isolating the first channel structure, and wherein at least one further thermal isolation element is assigned to the at least one further recess for thermally isolating the at least one further channel structure.

8. The mold according to any one of the preceding claims, comprising a first and at least one further recess, wherein an additional structural element is assigned to both the first and the at least one further recess for closing the first and the at least one further recess to form a first and at least one further closed channel structure; or comprising a first and at least one further recess, wherein a first additional structural element is assigned to the first recess for closing the first recess to form a first closed channel structure, and wherein at least one further additional structural element is assigned to the at least one further recess for closing the at least one further recess to form at least one further closed channel structure.

9. The mold according to any one of the preceding claims, comprising a first and at least one further recess arranged at an angle relative to the first recess.

10. The mold according to any one of the preceding claims, comprising a first and at least one further recess which are identical or differ in at least one of the following parameters: cross-sectional shape, depth, width, length, shape, spatial extension within the second face.

11. The mold according to any one of the preceding claims, wherein the at least one thermal isolation element and/or the at least one additional structural element s detachably attached to the at least one wall element, particularly via a bolted connection.

12. The mold according to any one of the preceding claims, wherein the at least one wall element comprises at least one through-hole communicating with the cavity for supplying a process medium, e.g. steam, into the cavity.

13. The mold according to any one of the preceding claims, further comprising a base structure, particularly a base plate, comprising at least one receiving section for receiving the at least one wall element; wherein the at least one receiving section is preferably built as or comprises a recess configured to receive the at least one wall element.

14. The mold according to claim 13, wherein the base structure is provided with one or more channels for a tempering medium, wherein the one or more channels are arranged to communicate with the at least one channel structure of the at least one wall element such that a tempering medium can flow from the one or more channels into the at least one channel structure of the at least one wall element or vice versa.

15. Apparatus, particularly steam-chest molding apparatus, for processing expandable or expanded polymer beads to form a particle foam component, the apparatus comprising at least one mold according to any one of the preceding claims.
